# FASCICULE DE BREVET EUROPEEN

(11) **EP 3 289 437 B1**
(45) Date de publication et mention de la délivrance du brevet: **26.08.2020**
(21) Numéro de dépôt: 16723270.1
(22) Date de dépôt: 27.04.2016
(51) Int. Cl.: G06F 3/02, H01H 13/00, G07F 7/10, G07F 19/00

(54) **DÉTECTION D'OUVERTURE D'UN DISPOSITIF DE SAISIE DE DONNÉES**
NACHWEIS DES ÖFFNENS EINER DATENEINGABEVORRICHTUNG
DETECTION OF THE OPENING OF A DATA INPUT DEVICE

(30) Priorité: 27.04.2015 FR 1553778
(43) Date de publication de la demande: 07.03.2018
(73) Titulaire: Ingenico Group, 75015 Paris (FR)
(72) Inventeur: ANDRE, Jérôme, 26760 Montoison (FR); ROSSIGNOL, Michel, 26760 Monteleger (FR); BERTHIAUD, Michel, 07130 Cornas (FR)
(74) Mandataire: Vidon Brevets & Stratégie
(86) Numéro de dépôt international: PCT/EP2016/059448
(87) Numéro de publication internationale: WO 2016/174114

(56) Documents cités:
- WO-A1-01/69560
- US-A1- 2011 100 788

## Description

### 1. Domaine de l'invention

L'invention se rapporte au domaine des dispositifs de saisie de données, tels que des terminaux de paiement. L'invention se rapporte plus particulièrement au domaine des dispositifs de saisie de données de paiement d'un clavier, par exemple d'un clavier rétroéclairé. Les terminaux de paiements intègrent généralement un clavier ou un pinpad pour permettre notamment la saisie d'informations telles qu'un code d'identification personnel ou des données de transaction. Habituellement, les claviers sont rétroéclairés, c'est-à-dire qu'ils sont illuminés par l'arrière du clavier. Dans les applications classiques, avec rétroéclairage, le clavier est constitué de pièces du capotage, d'un ou plusieurs pavés de touches silicone et d'une pièce transparente permettant de diffuser la lumière du rétro-éclairage (lumière provenant elle-même par exemple d'une ou plusieurs diodes électroluminescentes). De manière traditionnelle cette pièce transparente est appelée guide-lumière. Il existe également des dispositifs de saisie de données dont le clavier n'est pas rétroéclairé. La technique proposée s'applique également à de tels dispositifs, comme cela est explicité par la suite.

### 2. Art Antérieur

Dans les terminaux de paiements, il est nécessaire de se protéger contre des tentatives de fraudes. Ainsi, des mesure de protections sont mises en œuvre. Ces mesures de protection sont soit des mesures de protection matérielles soit des mesures de protection logicielles. Parmi les mesures de protection matérielles, on trouve notamment les techniques destinées à protéger le clavier du terminal. Il faut notamment se prémunir par exemple d'une tentative de récupération de code d'identification personnel et plus généralement des tentatives d'espionnage du clavier.

Dans des terminaux d'ancienne génération, la taille du terminal lui-même et la taille des touches du clavier du terminal permettent d'écarter les touches de manière plus ou moins importante. Cela présente un intérêt car des techniques appelés « fausses touches » sont utilisées pour renforcer la sécurité et vérifier que le terminal ne subit pas une tentative de démontage. En effet, un terminal de paiement comprend de manière classique, une demi-coque supérieure et une demi-coque inférieure. La demi-coque supérieure comprend des ouvertures qui sont utilisées par exemple pour laisser dépasser les touches du clavier. La demi-coque supérieure comprend également une ouverture pour l'écran d'affichage du terminal. Au niveau du clavier, les dispositifs fausses touches sont utilisés pour vérifier d'une part que la demi-coque supérieure du terminal est bien emboitée dans la demi-coque inférieure et d'autre part que les fausses touches reposent sur au moins une carte de circuit imprimé (carte mère) présente dans le terminal de paiement. Ceci permet de s'assurer que le terminal de paiement n'est pas ouvert et donc qu'il n'y a pas de tentative d'introduction d'un dispositif espion au niveau du clavier du terminal de paiement par exemple. Les fausses touches sont pressées par exemple par l'intermédiaire d'une extension en plastique (pleine ou non) s'étendant de l'intérieur de la demi-coque supérieure pour venir prendre place sur la fausse touche de la carte de circuit imprimé (carte mère). Cette solution de l'art antérieur est généralement assez efficace. Néanmoins, cette solution est assez ancienne et ne convient pas nécessairement aux nouveaux types de terminaux de paiement.

En effet, cette solution de l'art antérieur pose au moins deux problèmes : le premier problème tient au fait qu'il est difficile de créer de telles fausses touches lorsque les touches du clavier sont disposées de manière compacte et serrée. En effet, la solution de l'art antérieur nécessite des espaces relativement importants entre les touches afin que des extensions en plastique s'étendant de l'intérieur de la demi-coque supérieure puissent traverser le clavier et venir prendre place sur la fausse touche de la carte mère. Or, dans une optique de réduction de la taille des terminaux de paiement, l'espace disponible pour de telles extensions en plastique n'est pas obligatoirement présent.

Le deuxième problème tient à la fabrication de l'extension en plastique elle-même, et d'un point de vue plus général, à la fabrication de la demi-coque supérieure. Cette fabrication est problématique tant du point de vue esthétique que du point de vue sécuritaire. Du point de vue esthétique, sur la face externe, visible, de la demi-coque supérieure, la présence des extensions provoque une légère déformation en creux, à l'endroit où se situe cette extension. Ceci est dû au fait que la demi-coque inférieure et la demi-coque supérieure, tout comme la majorité des autres pièces plastiques nécessaires à la fabrication du terminal, sont fabriquées à l'aide d'un procédé d'injection consistant à introduire de la matière plastique chaude sous pression dans un moule. L'injection plastique provoque des déformations à certains endroits des pièces, par exemple au niveau des extensions. Le problème sécuritaire découle de ce problème esthétique. En effet, un attaquant sait précisément où se situent les fausses touches en observant le clavier : les déformations qui sont présentes entre les touches, aux endroits où les extensions en plastiques se prolongent vers les fausses touches disposées sur la carte mère du terminal permettent d'identifier aisément l'emplacement de ces fausses touches et, par voie de conséquence, de renseigner l'attaquant sur les endroits ou ne se situent pas ces fausses touches. L'attaquant peut alors tenter de percer la demi-coque supérieure pour y introduire un dispositif espion.

Une solution à ce problème pourrait être de recouvrir la demi-coque supérieure d'un film ou d'une enveloppe permettant de masquer ces déformations et ces imperfections. Malheureusement, cette solution ne permettrait pas de résoudre le problème de place disponible pour les extensions en plastique. Une autre solution pourrait être d'utiliser une matière plastique différente qui ne présenterait pas ces problèmes de déformation. Outre qu'elle ne résout pas les problèmes de place, cette solution serait également plus onéreuse.

### 3. Résumé

La présente divulgation permet de résoudre au moins certain des problèmes posés par ces terminaux de l'art antérieur. En effet, il est défini un Élément support d'un pavé de touches compris dans un clavier d'un dispositif de saisie de données. Un tel élément est remarquable en ce qu'il comprend des moyens de mise sous pression d'au moins une fausse touche d'un circuit imprimé.

Ainsi, cet élément support, qui n'est pas une pièce externe du terminal, et qui n'est donc pas visible de l'extérieur de celui-ci permet tout à la fois d'assurer une fonction de sécurisation en effectuant une pression sur les fausses touches de la carte mère tout en prévenant le repérage de celles-ci.

Selon une caractéristique particulière, les moyens de mise sous pression d'au moins une fausse touche d'un circuit imprimé comprennent au moins un téton déformable situé sur une face inférieure dudit élément.

Selon une caractéristique particulière, lesdits moyens de mise sous pression d'au moins une fausse touche comprennent des moyens de réception d'une pression en provenance d'une demi-coque supérieure dudit dispositif de saisie de données.

Ainsi, la mise sous pression de l'élément n'est effectuée que lorsque le terminal est refermé (i.e. fonctionnel) après le montage. On dispose d'un système de report de charge de la demi-coque sur l'élément de support, lequel exerce à son tour une pression sur les fausses touches.

Selon un mode de réalisation particulier, ledit élément support prend la forme d'un guide lumière qui est conformé pour être positionné au-dessus d'un circuit imprimé comprenant ladite au moins une fausse touche.

Ainsi, il n'est pas nécessaire de prévoir une pièce supplémentaire à l'intérieur du terminal de paiement : on utilise plutôt une pièce existante en lui adjoignant une fonction complémentaire.

Selon un mode de réalisation particulier, ledit élément support se présente sous la forme d'un parallélépipède rectangle dont la longueur est une fonction de la longueur d'un premier nombre prédéterminé de touches dudit clavier et dont la largeur est une fonction de la largeur d'un deuxième nombre prédéterminé de touches, et dont l'épaisseur est une fonction de l'épaisseur dudit dispositif de saisie de données dans lequel ledit élément prend place. L'élément est remarquable en outre en ce qu'il comprend au moins une languette latérale, s'étendant sensiblement verticalement, ladite au moins une languette latérale comprenant en outre un trou oblong s'étendant sensiblement verticalement.

Selon une caractéristique particulière, l'élément support comprend deux languettes latérales, s'étendant sensiblement verticalement et comprenant chacune un trou oblong s'étendant sensiblement verticalement, lesdites languettes étant situé en vis-à-vis chacune sur un flanc dudit élément.

Selon un mode de réalisation particulier, lorsque ledit élément est un guide lumière, la face supérieure dudit élément comprend autant de trous traversant que le clavier comprend de touches, un trou correspondant à une touche dudit clavier.

Dans un aspect particulier, la technique se rapporte à un dispositif de saisie de données comprenant un clavier. un tel dispositif de saisie de donnée comprend un élément support d'un pavé de touches tel que définit préalablement; ledit élément support prenant place entre un circuit imprimé dudit dispositif de saisie et un pavé de touches comprenant lesdites touches dudit clavier, élément support d'un pavé de touches étant mobile entre une première position de montage dans laquelle ledit élément de support est monté sur une structure interne dudit dispositif de saisie de données et une deuxième position de mise sous pression dans laquelle l'élément support exerce une pression sur une fausse touche dudit circuit électronique en transférant une pression qu'il reçoit d'une demi coque supérieure dudit dispositif de saisie de données.

### 4. figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- la figure 1 est une vue schématique d'un terminal de paiement de l'art antérieur ;
- la figure 2 illustre le guide lumière et la carte mère du terminal de paiement selon un mode de réalisation de l'invention ;
- la figure 3 illustre le montage du guide lumière et la structure interne selon le mode de réalisation de la figure 2.

### 5. Description

Le principe général de la technique décrite consiste à reporter la fonction de pression sur les fausses touches au niveau soit d'une pièce spécifiquement dédiée à cet effet, soit au niveau du guide lumière lorsque celui-ci existe. La technique se rapporte plus spécifiquement à un élément support d'un pavé de touches, compris dans un clavier d'un dispositif de saisie de données. Cet élément support comprend des moyens de mise sous pression d'au moins une fausse touche d'un circuit imprimé. Les moyens de mise sous pression comprennent au moins un téton déformable situé sur une face inférieure de l'élément support. Les moyens de mise sous pression comprennent également, dans un mode de réalisation, des moyens de réception d'une pression en provenance d'une demi-coque supérieure du dispositif de saisie de données.

Plus particulièrement, dans un mode de réalisation, le guide lumière est utilisé comme élément de transfert de pression sur les fausses touches : le guide lumière est alors l'élément support du pavé de touches. Le guide lumière exerce ainsi, soit directement, soit indirectement, une pression sur la fausses touches de la carte mère. Dès lors, il n'est plus nécessaire de prévoir, au niveau de la demi-coque supérieure, des extensions qui se prolongent jusqu'aux fausses touches de la carte mère. Il en résulte que l'attaquant potentiel ne peut plus deviner où se situent ces fausses touches et que la demi-coque supérieure ne comprend plus de défauts esthétiques. De manière complémentaire, la technique décrite permet également de résoudre un important problème de montage et d'assemblage du dispositif de saisie de données (par exemple un terminal de paiement ou un pinpad) : comme cela est exposé infra, le montage du dispositif s'en trouve facilité car l'assemblage du guide lumière sur la carte mère assure que ce guide lumière ne puisse pas glisser ou tomber de la carte mère. Cela permet une manipulation plus aisée du terminal en cours de montage. Cela permet également, par rapport aux techniques antérieures, de ne pas avoir à guider précisément les extensions en plastique dans des trous pratiqués dans le pavé de touches en silicone et dans le guide lumière : l'assemblage final du terminal (i.e. assemblage de la demi-coque supérieure et de la demi-coque inférieure) est donc grandement facilité, ce qui signifie qu'il est moins cher.

Lorsque le guide lumière n'existe pas, et que les touches du pavé de touches en silicone sont directement en contact avec les touches correspondantes sur la carte mère, la technique peut être matérialisée par l'utilisation d'une pièce plastique complémentaire, servant par exemple de châssis au pavé de touches en silicone et assurant en même temps les fonctions de transfert de pression sur les fausses touches du clavier de la carte mère. Cette pièce complémentaire constitue l'élément support du pavé de touches.

Pour la suite et pour ce qui précède, il est entendu qu'un clavier, au sens de la présente, comprend un pavé de touches (en silicone ou dans une autre matière déformable, voire un pavé de touches mécaniques) comprenant un certain nombre de touches. Lorsque le terminal ou le pinpad est monté, les touches de ce pavé de touches, sont situées en regard de pastilles de contact montées sur la carte mère. L'appui sur une touche du pavé de touches provoque une pression sur la pastille de contact correspondante de la carte mère. Entre les pastilles de contact « régulières » correspondant à des touches réelles du clavier, on dispose de pastilles de contact de sécurité, qui sont appelées « fausses touches ». Ces pastilles de sécurité sont pressées, lors du fonctionnement du dispositif de saisie de données. S'il advient que l'une des pastilles de sécurité ne soit pas ou plus pressée, le dispositif passe en mode intrusion et met en œuvre des mesures de sécurité (effacement de la mémoire par exemple).

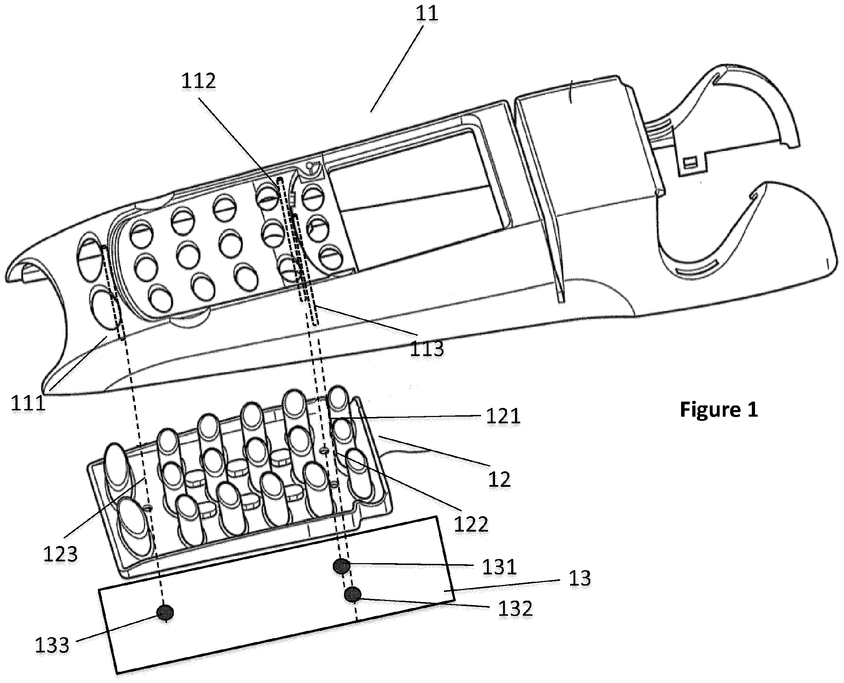

À titre indicatif, un exemple de terminal de l'art antérieur est décrit en relation avec la figure 1. La figure 1 illustre la structure d'un terminal de paiement de l'art antérieur. Ce terminal de paiement comprend une demi-coque supérieure 11, un pavé de touches en silicone 12 formant des touches souple d'un clavier et éventuellement un guide lumière (non représenté), une carte de mère 13 et une demi-coque inférieure non représentée. Lors du montage du terminal de paiement, la demi-coque supérieure 11 et la demi-coque inférieure sont assemblées et emboitent le pavé de touches 12 et la carte mère 13. Les extensions 111, 112 et 113 en plastique s'étendant de l'intérieur de la demi-coque supérieure traversent le pavé de touches en silicone 12 (et le guide lumière s'il existe) par les orifices 121, 122 et 123, et applique une pression sur les fausses touches 131, 132, et 133 de la carte mère 13 (les extensions peuvent être munies d'éléments complémentaires pour exercer la pression sur les fausses touches, tels que des pucks en silicone). Lors de l'ouverture du terminal, les extensions s'écartent des fausses touches. Cette ouverture (intrusion) est ainsi détectée par les circuits de détection connectés aux fausses touches et permettent de déclencher un mécanisme de protection du terminal (consistant par exemple à effacer les mémoires sécurisées du terminal). En revanche, lorsque l'attaquant connaît l'emplacement des fausses touches (à cause des déformations de la matière plastique de la demi-coque supérieure), il peut aisément attaquer le terminal en tentant de percer la demi-coque supérieure pour y introduire un dispositif espion ou encore pour tenter de maintenir une pression sur les fausses touches même en cas de démontage du terminal.

La technique proposée permet de contrer de telles tentatives. La technique proposée est en outre parfaitement adaptée aux dispositifs de tailles réduites pour lesquels il n'est pas envisageable de disposer d'extensions, telles que définies précédemment.

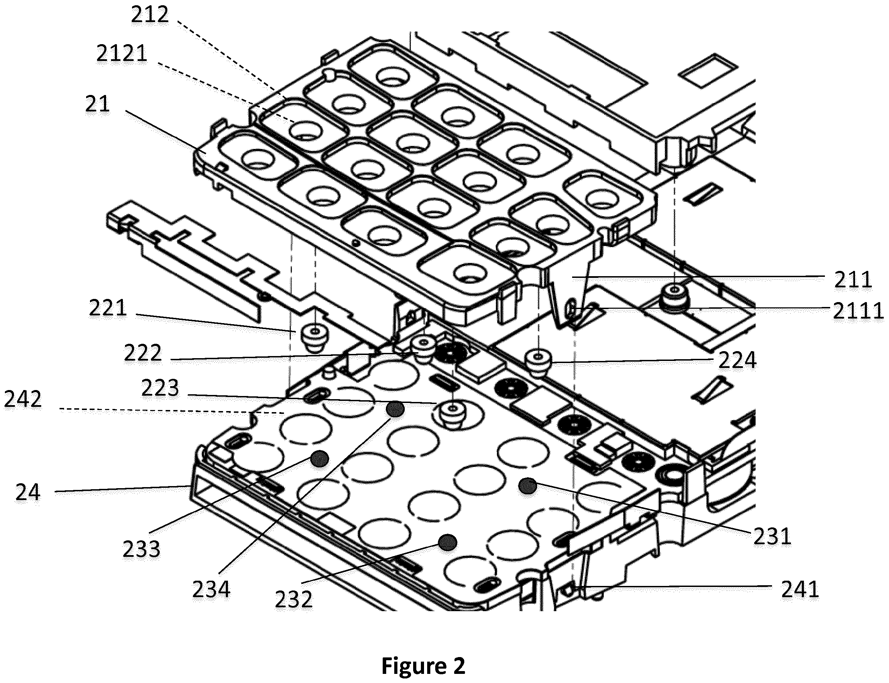

La figure 2 illustre un guide lumière 21 et une carte mère 23 disposée sur une structure interne 24 selon un mode de réalisation de la présente technique.

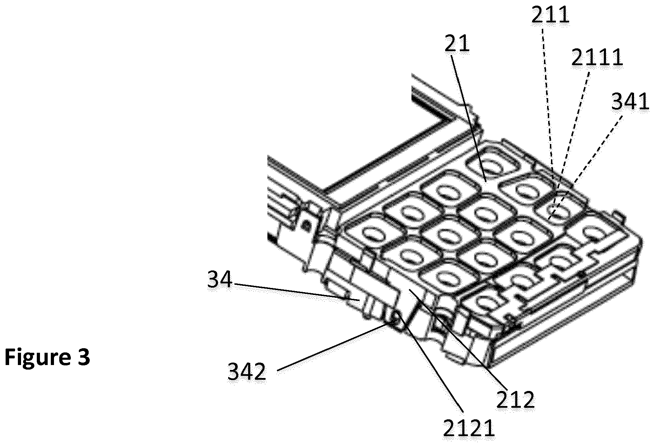

Comme exposé en figure 2, l'élément support se présente sous la forme d'un parallélépipède rectangle dont la longueur est une fonction de la longueur d'un premier nombre prédéterminé de touches dudit clavier et dont la largeur est une fonction de la largeur d'un deuxième nombre prédéterminé de touches, et dont l'épaisseur est une fonction de l'épaisseur dudit dispositif de saisie de données dans lequel ledit élément prend place. Dans le mode de réalisation présenté en figure 2, l'élément correspond à la longueur de quatre touches et à la largeur de quatre touches. L'élément support comprend également deux languettes latérales (211, 212), s'étendant sensiblement verticalement et comprenant chacune un trou oblong (2111, 2121) s'étendant sensiblement verticalement. Ce trou permet à l'élément support (lorsqu'il est attaché à la structure interne du dispositif de saisie de donnée) d'avoir un mouvement vertical (du haut vers le bas) : la première position (haute) correspond à la position de montage. La deuxième position (basse, voir figure 3), correspond à la position de mise sous pression (en fonctionnement).

À nouveau dans ce mode de réalisation, l'élément support est un guide lumière, mais ceci ne constitue qu'un exemple. Ainsi, à la différence des terminaux de paiement de l'art antérieur, ce mode de réalisation propose une solution inventive qui utilise le guide lumière 21 pour réaliser une pression sur les fausses touches 231, 232 et 233. Ainsi, cette solution permet d'éviter d'utiliser les extensions en plastique s'étendant de l'intérieur de la demi-coque supérieure. La conception de la demi-coque supérieure est par conséquence simplifiée. En outre, la face externe de la demi-coque supérieure ne présente plus de légères déformations provoquées par les extensions. Ceci fournit une esthétique améliorée et une sécurité accrue. Par ailleurs, la solution de l'invention est parfaitement adaptée aux terminaux ayant des touches du clavier qui sont disposées de manière compactes et serrées, pour lesquels il est difficile de mettre en œuvre la solution de l'art antérieur.

Dans ce mode de réalisation illustré par figure 2, la pression du guide lumière 21 sur les fausses touches est par exemple réalisée par l'intermédiaire de tétons ou de pads silicones 221, 222, 223 et 224. Chaque téton ou pad silicone dispose une extrémité en caoutchouc (qui peut être conducteur en fonction des modes de réalisation) qui permet d'activer une fausse touche en matériau déformable (ou en cuivre) correspondante. Bien entendu, les tétons ou pads silicones 221-224 peuvent être remplacés par les pads en tous matériaux, par exemple en caoutchouc, plastique etc. Par ailleurs, la fausse touche en cuivre peut être remplacée par tous composants permettant de détecter une pression ou de réaliser un pont ou un contact électrique.

Dans un autre mode de réalisation, les pads sont en matériau identique à celui du guide lumière, et les pads et le guide lumière forment une seule et unique pièce. Le guide lumière selon ce mode de réalisation permet de faciliter le montage du terminal de paiement. En effet, il n'est plus nécessaire de positionner les pads lors du montage du terminal de paiement.

Le guide lumière est une pièce située en dessous de la demi-coque supérieure. Comme son nom l'indique, il permet de guider de la lumière vers les touches du clavier lorsque celui-ci doit être utilisé. Ce guide lumière 21 comprend une caractéristique complémentaire : il dispose d'au moins une zone de report de charge de sorte que le guide lumière 21 n'appuie sur les fausses touches 231-234 que lorsque le terminal est assemblé : le guide lumière est conformé afin de disposer, sur au moins un de ses cotés, d'une zone qui entre en contact avec la demi-coque supérieure lorsque celle-ci est assemblée avec la demi-coque inférieure. Dès que le terminal (une demi-coque) est ouvert, les pads silicones 221-224 reprennent leur forme initiale et le guide lumière s'écarte des fausses touches 231-234. Cette caractéristique supplémentaire permet ainsi au terminal de détecter des intrusions par l'ouverture du boîtier (une demi-coque) du terminal.

Le guide lumière dispose par ailleurs de deux zones de solidarisation avec la structure interne 24 permettant de monter le guide lumière 21 sans que celui-ci ne puisse être facilement démonté par la suite. Il est ainsi plus facile de manipuler le terminal pendant le montage puisqu'on ne risque pas de faire tomber le guide lumière 21. On utilise pour ce faire, deux trous oblongs 2111, 2121 sur deux pattes latérale 211, 212 du guide lumière 21. Ces deux trous oblongs 2111, 2121 coopèrent avec deux clips (241, 242) disposés sur la structure interne 24 du terminal. La structure interne du terminal comprend notamment un châssis en matière plastique disposant en outre d'au moins un emplacement de réception d'une carte de circuit imprimé (carte mère du terminal). Les deux trous oblongs 2111, 2121 permettent d'avoir un mouvement de translation du guide lumière 21 de sorte que celui-ci n'est effectivement pressé contre la carte mère 23 qu'au moment du montage de la demi-coque supérieure avec la demi-coque inférieure. Ainsi, ces trous oblongs ont deux fonctions : la première est de guider le mouvement de translation du guide lumière lors du montage (et du démontage) du terminal afin que le guide lumière conserve une position de référence. La deuxième fonction est de permettre un montage facile du guide lumière et une manipulation tout aussi aisée lorsque le guide lumière est monté.

La figure 3 illustre le montage du guide lumière 21 ainsi que la carte mère 23 et la structure interne 24. Les deux clips 341, 342 disposés sur la structure interne 24 entre dans les deux oblongs 2111, 2121 des deux pattes latérales 211, 212 du guide lumière. Les deux clips 341, 342 ne remplissent pas les espaces internes des deux trous oblongs 2111, 2121. Lors que le guide lumière 21 est monté sur la structure interne 24, les clips 341, 342 se situent dans une position inférieure à l'intérieur des oblongs 2111, 2121. Lors de l'assemblage du terminal de paiement, la demi-coque supérieure exerce une pression sur le guide lumière 21. Le guide lumière 21 a par conséquence un mouvement de translation vers la structure interne 34, et les deux clips 341, 342 se déplacent vers le haut par rapport aux oblongs 2111, 2121 des pattes latérales 211, 212. Le guide lumière 21 devient effectivement pressé contre la carte mère au moment du montage de la demi-coque supérieure.

## Revendications

1. Élément support (21) d'un pavé de touches compris dans un clavier d'un dispositif de saisie de données, **caractérisé en ce qu'**il comprend des moyens de mise sous pression (221, 222, 223, 234) d'au moins une fausse touche (231, 232, 233, 234) d'un circuit imprimé.

2. Élément support (21) selon la revendication 1, **caractérisé en ce que** les moyens de mise sous pression (221, 222, 223, 234) d'au moins une fausse touche (231, 232, 233, 234) d'un circuit imprimé comprennent au moins un téton déformable situé sur une face inférieure dudit élément.

3. Élément support selon la revendication 1, **caractérisé en ce que** lesdits moyens de mise sous pression (221, 222, 223, 234) d'au moins une fausse touche (231, 232, 233, 234) comprennent des moyens de réception d'une pression en provenance d'une demi-coque supérieure dudit dispositif de saisie de données.

4. Élément support selon la revendication 1, **caractérisé en ce qu'**il prend la forme d'un guide lumière qui est conformé pour être positionné au-dessus d'un circuit imprimé comprenant ladite au moins une fausse touche.

5. Élément support selon la revendication 1, **caractérisé en ce qu'**il se présente sous la forme d'un parallélépipède rectangle dont la longueur est une fonction de la longueur d'un premier nombre prédéterminé de touches dudit clavier et dont la largeur est une fonction de la largeur d'un deuxième nombre prédéterminé de touches, et dont l'épaisseur est une fonction de l'épaisseur dudit dispositif de saisie de données dans lequel ledit élément prend place, élément **caractérisé en outre en ce qu'**il comprend au moins une languette latérale (211, 212), s'étendant sensiblement verticalement, ladite au moins une languette latérale comprenant en outre un trou oblong (2111, 2121) s'étendant sensiblement verticalement.

6. Élément support selon la revendication 4, **caractérisé en ce qu'**il comprend deux languettes latérales (211, 212), s'étendant sensiblement verticalement et comprenant chacune un trou oblong (2111, 2121) s'étendant sensiblement verticalement, lesdites languettes étant situé en vis-à-vis chacune sur un flanc dudit élément.

7. Élément support selon la revendication 4, **caractérisé en ce que** la face supérieure dudit élément comprend autant de trous traversant que le clavier comprend de touches, un trou correspondant à une touche dudit clavier.

8. Dispositif de saisie de données comprenant un clavier, **caractérisé en ce qu'**il comprend un élément support d'un pavé de touches selon l'une des revendications 1 à 7, ledit élément support prenant place entre un circuit imprimé dudit dispositif de saisie et un pavé de touches comprenant lesdites touches dudit clavier, élément support d'un pavé de touches étant mobile entre une première position de montage dans laquelle ledit élément de support est monté sur une structure interne dudit dispositif de saisie de données et une deuxième position de mise sous pression dans laquelle l'élément support exerce une pression sur une fausse touche dudit circuit électronique en transférant une pression qu'il reçoit d'une demi coque supérieure dudit dispositif de saisie de données.

## Patentansprüche

1. Stützelement (21) eines Tastenfelds, das in einer Tastatur einer Dateneingabevorrichtung enthalten ist, **dadurch gekennzeichnet, dass** es Druckmittel (221, 222, 223, 234) von mindestens einer falschen Taste (231, 232, 233, 234) einer gedruckten Schaltung aufweist.

2. Stützelement (21) nach Anspruch 1, **dadurch gekennzeichnet, dass** die Druckmittel (221, 222, 223, 234) von mindestens einer falschen Taste (231, 232, 233, 234) einer gedruckten Schaltung mindestens einen verformbaren Zapfen aufweisen, der sich auf einer unteren Seite des Elements befindet.

3. Stützelement nach Anspruch 1, **dadurch gekennzeichnet, dass** die Druckmittel (221, 222, 223, 234) von mindestens einer falschen Taste (231, 232, 233, 234) Aufnahmemittel eines Drucks von einer oberen Halbschale der Dateneingabevorrichtung aufweisen.

4. Stützelement nach Anspruch 1, **dadurch gekennzeichnet, dass** es die Form eines Lichtleiters annimmt, der ausgebildet ist, um über einer gedruckten Schaltung angebracht zu werden, die die mindestens eine falschen Taste aufweist.

5. Stützelement nach Anspruch 1, **dadurch gekennzeichnet, dass** es die Form eines rechtwinkligen Parallelepipeds aufweist, dessen Länge eine Funktion der Länge einer ersten vorbestimmten Anzahl von Tasten der Tastatur ist und dessen Breite eine Funktion der Breite einer zweiten vorbestimmten Anzahl von Tasten ist und dessen Dicke eine Funktion der Dicke der Dateneingabevorrichtung ist, in der sich das Element befindet, Element, das ferner **dadurch gekennzeichnet ist, dass** es mindestens eine seitliche Lasche (211, 212) aufweist, die sich im Wesentlichen vertikal erstreckt, wobei die mindestens eine seitliche Lasche ferner ein Langloch (2111, 2121) aufweist, das sich im Wesentlichen vertikal erstreckt.

6. Stützelement nach Anspruch 4, **dadurch gekennzeichnet, dass** es zwei seitliche Laschen (211, 212) aufweist, die sich im Wesentlichen vertikal erstrecken und jeweils ein Langloch (2111, 2121) aufweisen, das sich im Wesentlichen vertikal erstreckt, wobei die Laschen jeweils gegenüberliegend auf einer Flanke des Elements angeordnet sind.

7. Stützelement nach Anspruch 4, **dadurch gekennzeichnet, dass** die obere Seite des Stützelements ebenso viele Durchgangslöcher aufweist wie die Tastatur Tasten aufweist, wobei ein Loch einer Taste der Tastatur entspricht.

8. Dateneingabevorrichtung, umfassend eine Tastatur, **dadurch gekennzeichnet, dass** sie ein Stützelement eines Tastenfelds nach einem der Ansprüche 1 bis 7 aufweist, wobei das Stützelement zwischen einer gedruckten Schaltung der Dateneingabevorrichtung und einem Tastenfeld angeordnet ist, das die Tasten der Tastatur aufweist, wobei das Stützelement eines Tastenfelds zwischen einer ersten Montageposition, in der das Stützelement auf einer inneren Struktur der Dateneingabevorrichtung befestigt ist, und einer zweiten Druckposition beweglich ist, in der das Stützelement einen Druck auf eine falsche Taste der elektronischen Schaltung ausübt, indem es einen Druck überträgt, den es von einer oberen Halbschale der Dateneingabevorrichtung empfängt.

## Claims

1. Support element (21) of a keypad included in a keyboard of a data input device, **characterized in that** it comprises means (221, 222, 223, 234) for putting at least one dummy key (231, 232, 233, 224) of a printed-circuit board under pressure.

2. Support element (21) according to claim 1, **characterized in that** said means (221, 222, 223, 224) for putting at least one dummy key (231, 232, 233, 234) of a printed-circuit board under pressure comprise at least one deformable nipple situated on a lower face of said element.

3. Support element (21) according to claim 1, **characterized in that** said means (221, 222, 223, 224) for putting at least one dummy key (231, 232, 233, 234) under pressure comprise means for receiving pressure coming from an upper half-shell of said data input device.

4. Support element according to claim1, **characterized in that** it takes the form of a light guide that is shaped to be positioned above a printed-circuit board comprising said at least one dummy key.

5. Support element according to claim 1, **characterized in that** it takes the form of a rectangular parallelepiped, the length of which depends on the length of a first pre-determined number of keys of said keyboard, the width of which depends on the width of a second determined number of keys of said keyboard and the thickness of which depends on the thickness of said data input device in which said element takes position, said element being further **characterized in that** it comprises at least one lateral tab (211, 212) extending substantially vertically, said at least one lateral tab further comprising an oblong hole (2111, 2121) extending substantially vertically.

6. Support element according to claim 4, **characterized in that** it comprises two lateral tabs (211, 212) extending substantially vertically and each comprising an oblong hole (2111, 2121) extending substantially vertically, said tabs being situated so as to be facing each other, each on one side of said element.

7. Support element according to claim 4, **characterized in that** the upper face of said element comprises as many through holes as the keyboard has keys, one hole corresponding to one key of said keyboard.

8. Data input device comprising a keyboard, **characterized in that** it comprises a support element of a keypad according to one of the claims 1 to 7, said support element taking position between a printed-circuit board of said input device and a keypad comprising said keys of said keyboard, the support element of a keypad being mobile between a first mounting position in which said support element is mounted on an internal structure of said data input device and a second position of putting under pressure in which said support element exerts pressure on a dummy key of said electronic surface by transferring a pressure that it receives from an upper half-shell of said data input device.
